# EUROPEAN PATENT APPLICATION

(11) **EP 3 308 849 A1**
(43) Date of publication of application: **18.04.2018**
(21) Application number: 17196707.8
(22) Date of filing: 03.03.2011
(51) Int. Cl.: B01F 5/10, B01F 7/16, B01F 13/10, C02F 3/12, C02F 3/28, B01F 3/12, B01F 15/00

(54) **WASTE WATER TREATMENT SYSTEM**

(30) Priority: 03.03.2010 ZA 201001553
(62) Divisional of application: 14181999.5
(71) Applicant: Van Den Berg, Zacharias Joseph, 2515 Fochville (ZA)
(72) Inventor: Van Den Berg, Zacharias Joseph, 2515 Fochville (ZA)
(74) Representative: Forrest, Stuart

(57) **Abstract**

Disclosed is a liquid mixing and pumping system (10) and a waste water treatment works incorporating it. The system is for a reservoir (20) operatively containing liquid (46) and includes a mixer (28), operatively submerged in the liquid and rotatable about a vertical rotational axis (30). By rotation of the mixer by drive means (32), a reduced pressure zone is induced at the mixer and about the rotational axis. Peripherally around the vanes (44), outward flow of the liquid away from the mixer is induced. The system includes also at least one transfer pipe (34) defining an outlet (38) exposed to the reduced pressure zone and an inlet (36) in a source (22) of the liquid. The reduced pressure zone induces a pressure head which causes transfer of liquid from the source into the reservoir. The system serves a dual purpose, i.e. mixing in the reservoir (20) and pumping into the reservoir (20).

## Description

THIS INVENTION relates to a liquid mixing and pumping system and to a waste water treatment works including such a system.

The term reservoir, as used herein, must be interpreted sufficiently broadly to include also a reactor, where the context allows. A liquid, as referred to herein, must be interpreted sufficiently broadly to include a liquid having solids suspended therein.

According to a first aspect of the invention there is provided a liquid mixing and pumping system for a reservoir operatively containing liquid, the system including:
a mixer, operatively submerged in the liquid contained in the reservoir and rotatable about a vertical rotational axis, the mixer including an arrangement of vanes arranged peripherally around the rotational axis and being spaced from all sides of the reservoir;
drive means for operatively rotating the mixer when submerged in the liquid to induce at the mixer a reduced pressure zone about the rotational axis and, peripherally around the vanes, outward flow of the liquid away from the mixer; and
at least one transfer pipe defining an outlet exposed to the reduced pressure zone and an inlet in a source of the liquid, for transferring the liquid from the source into the reservoir.

The applicant envisages that a main advantage of the liquid mixing and pumping system of the invention will be economy in that, by performing both mixing and pumping in applications requiring both, the requirement otherwise of a dedicated conventional pump is eliminated. Another advantage is that liquid pumped into the reservoir by the mixer is mixed into the liquid in the reservoir.

The rotational speed of the mixer may be adjustable, thereby to vary the flow rate and potential head generated through the at least one transfer pipe. The drive means may be operable to rotate the mixer at a rotational speed which is in the range 5rpm to 250rpm.

The reduced pressure zone operatively may extend to below and above the mixer and the at least one transfer pipe may include a lower transfer pipe having an outlet below the mixer and in the reduced pressure zone. The outlet of the lower transfer pipe may be upwardly facing. By varying vertical clearance between the outlet and the mixer, the flow rate through the transfer pipe may be varied.

The applicant envisages that, in most applications, the liquid mixing and pumping system including the lower transfer pipe will act as a high volume, low pressure pump and mixer, the primary purpose thereof being mixing and the secondary purpose being pumping of liquid through the transfer pipe. Pumping typically will occur at a lower pressure head than in a conventional pump, resulting in energy saving.

A possible particular embodiment of the system of the first aspect of the invention includes a drive axle for the mixer, extending upwardly from the mixer, and an upright sleeve disposed around the drive axle, the sleeve defining a top end operatively above the surface of the liquid in the reservoir and a bottom end operatively below the surface of the liquid and above the mixer. The at least one transfer pipe includes an upper transfer pipe having an outlet in communication with a passage defined in the sleeve, the outlet being at a level operatively below the surface of the liquid in the reservoir, in a configuration in which, in operation, outward flow of liquid away from the mixer causes the reduced pressure zone which, in turn, causes the liquid level in the sleeve to drop.

The liquid level in the sleeve is equal to or lower than what the level in the reservoir would have been at the centre of a forced vortex which would have occurred in the reservoir but for the presence of the sleeve.

The liquid mixing and pumping system of the said particular embodiment may include a hood at the bottom end of the sleeve, disposed over the mixer, for preventing a vortex which may operatively form in the sleeve from reaching the mixer and interfering with its operation. The hood may be a horizontal disc, which may be flat.

The applicant envisages that the liquid mixing and pumping system of the said particular embodiment will be configured to pump liquid at a low volume and high pressure head, typically between 1.0m and 5.0m.

It is envisaged that, in a typical installation of the liquid mixing and pumping system of the said particular embodiment, liquid will gravitate into the reservoir. Pumping typically will occur at a lower pressure head than in a conventional pump, resulting in energy saving.

The mixer may include a vane carrier, e.g. a vane carrier plate. The arrangement of vanes of the mixer may include an upper arrangement of vanes standing proud of the vane carrier. It may, alternatively or additionally, include a lower arrangement of vanes depending from the vane carrier.

The system may include also at least one other mixer, with the mixers being of different sizes and being interchangeable to vary the flow rate and potential head generated through the at least one transfer pipe. The sizes of the respective mixers may, for example, differ in the outer diameters of their arrangements of vanes.

According to a second aspect of the invention, there is provided a waste water treatment works including a liquid mixing and pumping system, in accordance with the first aspect of the invention.

A possible embodiment of the treatment works, according to the second aspect of the invention, may include an aerobic reactor,
the reservoir being an anoxic reactor;
the liquid mixing and pumping system being one including a lower transfer pipe, as defined above; and
the lower transfer pipe having its inlet in the aerobic reactor and serving to recycle liquid by transferring it to the anoxic reactor.

The said possible embodiment may include a weir between the anoxic reactor and the aerobic reactor, the liquid mixing and pumping system being operable to induce, by mixing and pumping, a liquid level rise in the anoxic reactor above the level of the weir, thus inducing overflow of the liquid over the weir from the anoxic reactor into the aerobic reactor.

Another possible embodiment of the treatment works, according to the second aspect of the invention, may include a raw inlet chamber,
the reservoir being a raw sewage reservoir;
the liquid mixing and pumping system being one including an upper transfer pipe, as defined above; and
the upper transfer pipe having its inlet in the raw inlet chamber and serving to transfer liquid to the raw sewage reservoir.

Yet another possible embodiment of the treatment works, according to the second aspect of the invention, may include a denitrification reactor and a raw inlet chamber,
the reservoir being an anaerobic reactor;
the liquid mixing and pumping system including both a lower and an upper transfer pipe, as defined above;
the lower transfer pipe having its inlet in the denitrification reactor and serving to transfer liquid to the anaerobic reactor; and
the upper transfer pipe having its inlet in the raw inlet chamber and serving to transfer liquid to the anaerobic reactor.

In this embodiment, a weir may be provided between the anaerobic reactor and the anoxic reactor, in a configuration in which, due to the liquid level being higher in the anaerobic reactor than in the anoxic reactor, made possible by the upper transfer pipe providing higher head, the liquid flows over the weir to the anoxic reactor from the anaerobic reactor.

A waste water treatment works, according to the second aspect of the invention, may include a combination of any of the said possible embodiments.

The treatment works may employ an activated sludge process.

According to a third aspect of the invention there is provided a method of agitating and pumping liquid, the method including:
by means of a mixer submerged in a liquid in a reservoir and rotatable about a vertical rotational axis, creating, peripherally around the mixer, outward flow of the liquid away from the mixer, the mixer including an arrangement of vanes arranged peripherally around the rotational axis;
by such flow of liquid, agitating the liquid in the reservoir and inducing at the mixer a reduced pressure zone about the rotational axis within and above and below the arrangement of vanes ;
by such inducing of a reduced pressure zone, inducing a pressure head between an outlet of a transfer pipe, the outlet being exposed to the reduced pressure zone, and an inlet of the transfer pipe; and
by inducing such a pressure head, inducing flow of liquid away from a source at the inlet of the pipe and into the reservoir.

Further features of the method of the third aspect of the invention may be analogous to features of the liquid mixing and pumping system of the first aspect of the invention.

Further features of the invention will become apparent from the description below of examples of a liquid mixing and pumping system, in accordance with the invention, and examples of a waste water treatment works, in accordance with the invention, with reference to and as illustrated in the accompanying diagrammatic drawings. In the drawings:
Figure 1 shows a sectional elevation of a first liquid mixing and pumping system, in accordance with the invention, installed in an arrangement of reservoirs;
Figure 2 shows a sectional elevation of a second liquid mixing and pumping system, in accordance with the invention, installed in an arrangement of reservoirs;
Figure 3 shows a sectional elevation of a third liquid mixing and pumping system, in accordance with the invention, installed in an arrangement of reservoirs;
Figure 4a shows a flow diagram of a waste water treatment process employing a waste water treatment works, in accordance with the invention;
Figure 4b shows a plan view of the waste water treatment works of Figure 4a;
Figure 4c shows a part sectional elevation of the waste water treatment works of Figure 4b;
Figure 5a shows a flow diagram of another waste water treatment process employing another waste water treatment works, in accordance with the invention;
Figure 5b shows a plan view of the waste water treatment works of Figure 5a; and
Figure 5c shows a part sectional elevation of the waste water treatment works of Figure 5b.

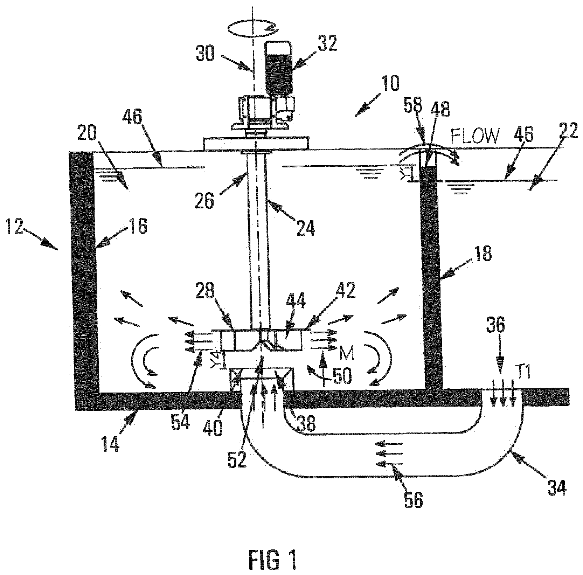

In Figure 1, a first liquid mixing and pumping system, in accordance with the invention, is designated generally by the reference numeral 10.

The liquid mixing and pumping system 10 is installed in a concrete structure 12 including a base slab 14 and an arrangement of side walls, including a side wall 16 and a side wall 18. The concrete structure 12 defines a first reservoir 20 and a second reservoir 22, separated by the wall 18.

The liquid mixing and pumping system 10 includes:
a rotor 24 including a vertical shaft 26 and a mixer 28 on a bottom end of the shaft 26, the rotor 24 having a vertical rotational axis 30;
drive means in the form of an electric drive mechanism 32 for driving the rotor 24 and from which the rotor 24 is suspended; and
an underground lower transfer pipe 34 exiting the reservoir 20 through the slab 14 and entering the reservoir 22 through the slab 14.

The transfer pipe 34 defines an inlet 36 at a bottom of the reservoir 22 and an outlet 38 within a horizontal collar 40 near a bottom of the reservoir 20 and coaxial with and below the mixer 28.

The mixer 28 includes a horizontally disposed, round vane carrier plate 42 mounted on a bottom of the shaft 26 and an arrangement of vanes 44 secured to an underside of the vane carrier plate 42. A vertical gap Y4 is defined between the collar 40 and bottom edges of the vanes 44. The mixer 28 may also be regarded as a centrifugal impeller.

The reservoir 20 contains liquid 46 up to a level as shown and as defined by a weir 48 defined by the wall 18. The reservoir 22 is initially filled up to the same liquid level as the reservoir 20, and the liquid level difference indicated in Figure 1 as Y1 is a direct result of the liquid transfer along the pipe 34 as shown.

A liquid is designated herein throughout by the reference numeral 46. It must be appreciated, however, that liquids in different reservoirs and designated by the same reference numeral 46 may be different types of liquids.

In the liquid mixing and pumping system 10, it is required to agitate the liquid 46 in the reservoir 20 and also to circulate liquid between the reservoirs 20 and 22. This is achieved by means of the liquid mixing and pumping system 10, as will now be described.

The drive mechanism 32 is activated to drive the rotor 24 at a speed suitable for the required mixing of liquid 46 in the reservoir 20, typically a rotational speed below 200rpm. Centrifugal forces create an increased pressure zone 50 peripherally around the mixer 28 and a reduced pressure zone 52 at a centre of and immediately below the mixer 28. A concomitant pressure head causes, peripherally around the mixer 28, flow of the liquid 46 away from the mixer 28, as indicated by arrows 54, at a flow rate Qm. The liquid 46 is thus agitated and circulated in the reservoir 20.

The pressure in the reduced pressure zone 52 is lower than the pressure at the inlet 36. A concomitant pressure head causes liquid 46 to flow through the transfer pipe 34, as indicated by arrows 56, at a flow rate Qt. Such liquid flow into the reservoir 20 causes liquid flow over the weir 48, as indicated by arrows 58. The required circulation of liquid between the reservoirs 20 and 22 is thus achieved.

Typically, Qm >> Qt. Qm:Qt may, for example, be about 10:1.

Factors affecting Qm:Qt include:
the clearance Y4.
the cross-sectional area of the transfer pipe 34; and
the size of the mixer 28, e.g. the outer diameters of the vane carrier plate 42 and the arrangement of vanes 44.

Liquid flow through the pipe 34 occurs at a low pressure head and a high flow rate.

The reduced pressure zone 52 and the liquid flow in the pipe 34 induce a liquid level difference Y1 between the reservoirs 20 and 22. Typically, 10mm <= Y1 <= 600mm.

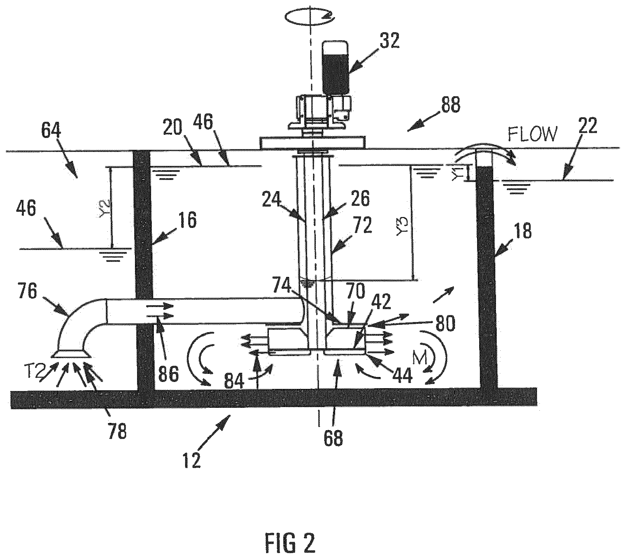

In Figure 2, a second liquid mixing and pumping system, in accordance with the invention, is designated generally by the reference numeral 88. The liquid mixing and pumping system 88 includes certain features of the liquid mixing and pumping system 10 of Figure 1. Corresponding features generally are again designated by the same reference numerals as before and are not described again.

The liquid mixing and pumping system 88 includes a third reservoir 64, separated from the first reservoir 20 by the wall 16.

The rotor 24 of the liquid mixing and pumping system 88 includes a mixer 68 identical to the mixer 28 of Figure 1, except that it also has an arrangement of vanes 70 on top of the vane carrier plate 42. Alternatively, the lower vanes of the mixer 68 may be smaller than those of the mixer 28.

The liquid mixing and pumping system 88 includes also:
a vertical sleeve 72 around the shaft 26 and a hood 74 on a bottom end of the sleeve 72 and over the vanes 70; and
an upper transfer pipe 76 extending through the wall 16 and defining an inlet 78 near a bottom of the reservoir 64 and an outlet into the sleeve 72.

A vertical gap 80 is defined between the vanes 70 and the hood 74.

The reservoir 64 contains liquid 46 up to a level as shown, Y2 below the liquid level in the reservoir 20.

It is required to agitate the liquid 46 in the reservoir 20 and to pump liquid from the reservoir 64 into the reservoir 20. This is achieved by means of the liquid mixing and pumping system 88, as will now be described.

The drive mechanism 32 is activated to drive the rotor 24 at a speed suitable for the required mixing of liquid in the reservoir 20, typically a rotational speed below 200rpm. Centrifugal forces create an increased pressure zone 84 peripherally around the vanes 70 of the mixer 68 and a reduced pressure zone in the sleeve 72, causing the liquid level in the sleeve 72 to drop to a level as shown, Y3 below the liquid level in the reservoir 20. The liquid level in the reservoir 64 is higher than the liquid level in the sleeve 72, i.e. Y3 > Y2. A concomitant pressure head between the inlet 78 of the pipe 76 and the inside of the sleeve 72 induces liquid flow through the pipe 76, as indicated by the arrows 86, at a flow rate Qt2. Such flow exits the liquid mixing and pumping system 88 through the gap 80 as well as through the top vanes 70.

Typically:
Qm >> Qt2. Qm:Qt2 may, for example, be about 3:1.
Y1 << Y2. Y2:Y1 may, for example, be about 10:1.
1.0m << Y2 <= 5.0m

In a typical installation of the liquid mixing and pumping system 88 in a waste water treatment works, the main purpose of the liquid flow through the pipe 76 may be recycling/transfer.

The bottom vanes 44 of the liquid mixing and pumping system 88 are much smaller than those of the liquid mixing and pumping system 10 of Figure 1, as a primary function of the system 88 is pumping and a secondary function is mixing.

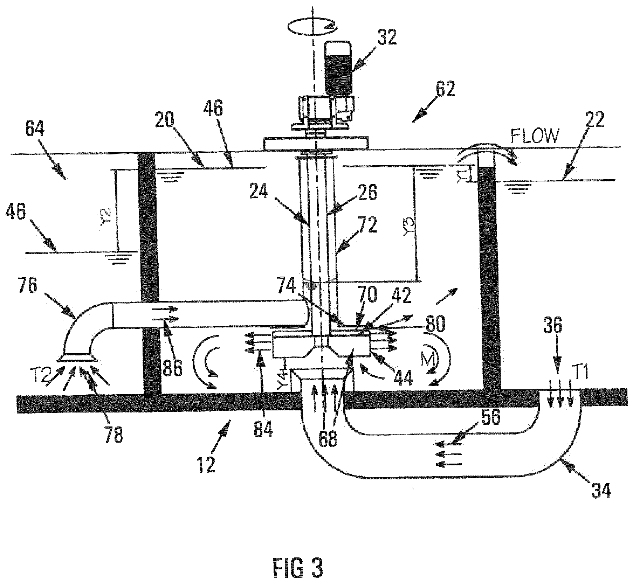

In Figure 3, a third liquid mixing and pumping system, in accordance with the invention, is designated generally by the reference numeral 62. The liquid mixing and pumping system 62 includes certain features of the liquid mixing and pumping systems 10 and 88 of Figures 1 and 2, respectively. Corresponding features generally are again designated by the same reference numerals as before and are not described again.

The liquid mixing and pumping system 62 includes a third reservoir 64, separated from the first reservoir 20 by the wall 16.

The rotor 24 of the liquid mixing and pumping system 62 includes a mixer 68 similar to the mixer 68 of the liquid mixing and pumping system 88 of Figure 2, except that the bottom vanes 44 are larger and the top vanes 70 smaller than in the system 88.

It is required to agitate the liquid 46 in the reservoir 20, circulate liquid 46 between the reservoirs 20 and 22, and pump liquid from the reservoir 64 into the reservoir 20. This is all achieved by means of the liquid mixing and pumping system 62, as will now be described.

The drive mechanism 32 is activated to drive the rotor 24 at a speed suitable for the required mixing of liquid in the reservoir 20, typically a rotational speed below 200rpm. Liquid flow as indicated by the arrows 56 occurs in the pipe 34, as in the liquid mixing and pumping system 10 of Figure 1. Centrifugal forces create an increased pressure zone 84 peripherally around the vanes 74 of the mixer 28 and a reduced pressure zone in the sleeve 72, causing the liquid level in the sleeve 72 to drop to a level as shown, Y3 below the liquid level in the reservoir 20. The liquid level in the reservoir 64 is higher than the liquid level in the sleeve 72, i.e. Y3 > Y2, resulting in the liquid flowing over the weir from the reservoir 20 to the reservoir 22. A concomitant pressure head between the water level 46 now in the reservoir 64 and the water level in the sleeve 72, indicated as Y3, induces liquid flow through the pipe 76, as indicated by the arrows 86, at a flow rate Qt2. Such flow exits the liquid mixing and pumping system 62 through the gap 80 as well as through the top vanes 70.

Typically:
Qm >> Qt. Qm:Qt may, for example, be about 10:1.
Qm >> Qt2. Qm:Qt2 may, for example, be about 3:1.
Qt > Qt2
Y1 << Y2. Y2:Y1 may, for example, be about 10:1.
1.0m << Y2 <=5.0m

In a typical installation of the liquid mixing and pumping system 62 in a waste water treatment works, the main purpose of the liquid flow through the pipe 34 is recycling in a waste water treatment process. The main purpose of the liquid flow through the pipe 76 is recycling/transfer at a higher head than the flow through the pipe 34.

The methods described above of both agitating and pumping liquid by means of any of the liquid mixing and pumping systems 10, 62, and 88 all are examples of a method in accordance with the second aspect of the invention.

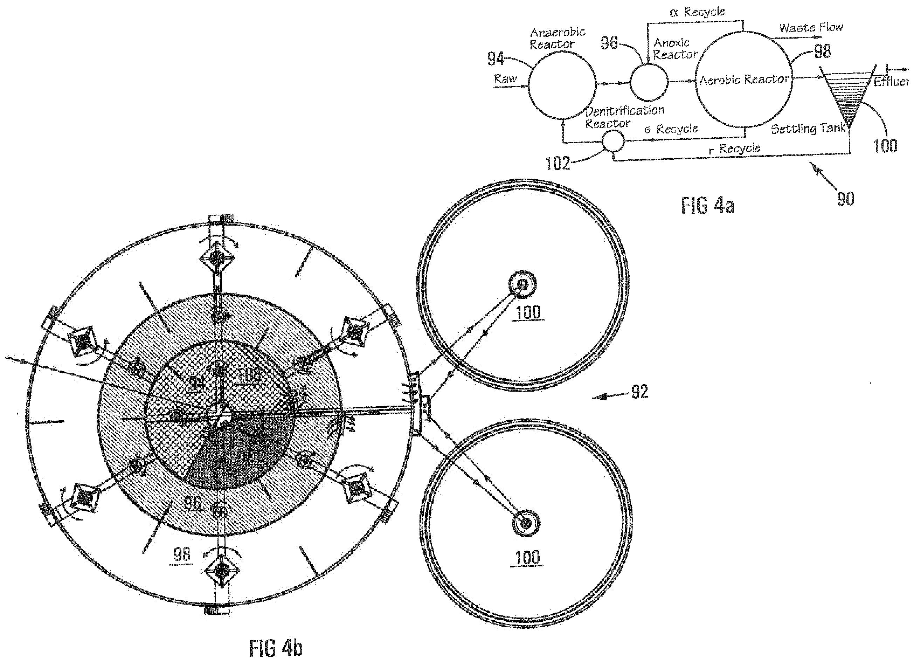

In Figure 4a, a waste water treatment process, illustrated by a flow diagram, is designated generally by the reference numeral 90. The waste water treatment process 90 is an activated sludge process.

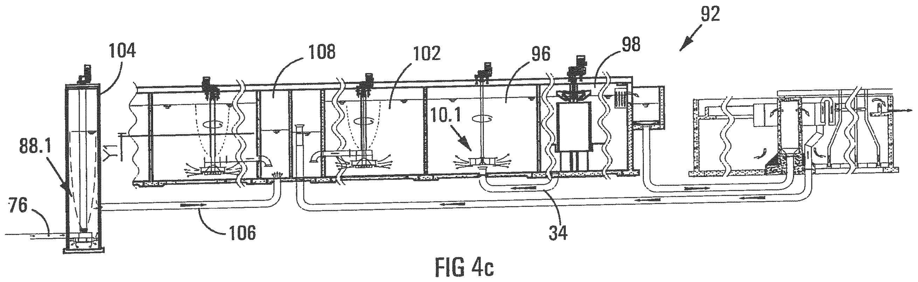

The waste water treatment process 90 is implemented by means of the waste water treatment works 92, in accordance with the invention, which is shown in plan view in Figure 4b and in part sectional elevation in Figure 4c.

The waste water treatment works 92 includes the following reservoirs:
an anaerobic reactor 94;
an anoxic reactor 96;
an aerobic reactor 98;
two settling tanks 100; and
a denitrification reactor 102.

The waste water treatment works 92 includes also an arrangement of liquid transfer lines and liquid mixing and pumping systems, in accordance with the invention, for effecting mixing and pumping of liquid in the plant 92. These liquid mixing and pumping systems include liquid mixing and pumping systems 10.1 and 88.1.

The liquid mixing and pumping system 10.1 is similar to the liquid mixing and pumping system 10 of Figure 1. Corresponding features generally are again designated by the same reference numerals as before and are not described again.

In the waste water treatment works 92, the liquid mixing and pumping system 10.1 serves to:
agitate the liquid in the anoxic reactor 96; and
pump liquid from the aerobic reactor 98 to the anoxic reactor 96.

The configuration of the waste water treatment works 92 is such that, in use, liquid is transferred by overflow from the denitrification reactor 102 to the anaerobic reactor 94 and then to the anoxic reactor 96 due to the liquid level being higher in the denitrification reactor 102 than that in the anaerobic reactor 94 and the liquid level in the anaerobic reactor 94 being higher than that in the anoxic reactor 96.

As part of the activated sludge process, a certain proportion of the liquid is required to be recycled from the aerobic reactor 98, in which aeration occurred, to the anoxic reactor 96, in which no oxygen is present. This is achieved by means of the liquid mixing and pumping system 10.1, which effects such transfer through the transfer pipe 34, which is also referred to as "a Recycle" in the activated sludge process. Such recycling would conventionally have been done using a conventional pump. The use of the liquid mixing and pumping system 10.1 for both mixing and transfer of liquid therefore eliminates the use of such a conventional pump.

The plant 90 includes also a raw sewage reservoir 104, in which the liquid mixing and pumping system 88.1 is installed. In the waste water treatment works 92, the liquid mixing and pumping system 88.1 serves to effect:
mixing of the liquid in the raw sewage reservoir 104; and
pumping of liquid from the reservoir 104 to a raw inlet chamber 108 of the plant 92.

The liquid mixing and pumping system 88.1 is similar to the liquid mixing and pumping system 88 of Figure 2. Corresponding features generally are again designated by the same reference numerals as before and are not described again.

The mixing and pumping system 88.1 includes an inlet pipe 76, a sleeve 72 (see Figure 2), and a hood 74 (see Figure 2). The pipe 76 transports raw sewage into the plant 92. Due to a reduced liquid level created in the sleeve 72 by operation of the mixer of the mixing and pumping system 88.1, as discussed above, liquid can be gravitated along the pipe 76 from a source with a lower liquid level than the reservoir 104.

The liquid is then gravitated along the pipe 106 to the inlet chamber 108 under a pressure head resulting from a liquid level difference Y1 between the reservoir 104 and the chamber 108.

The mixing and pumping system 88.1 also serves as a mixer in the reservoir 104.

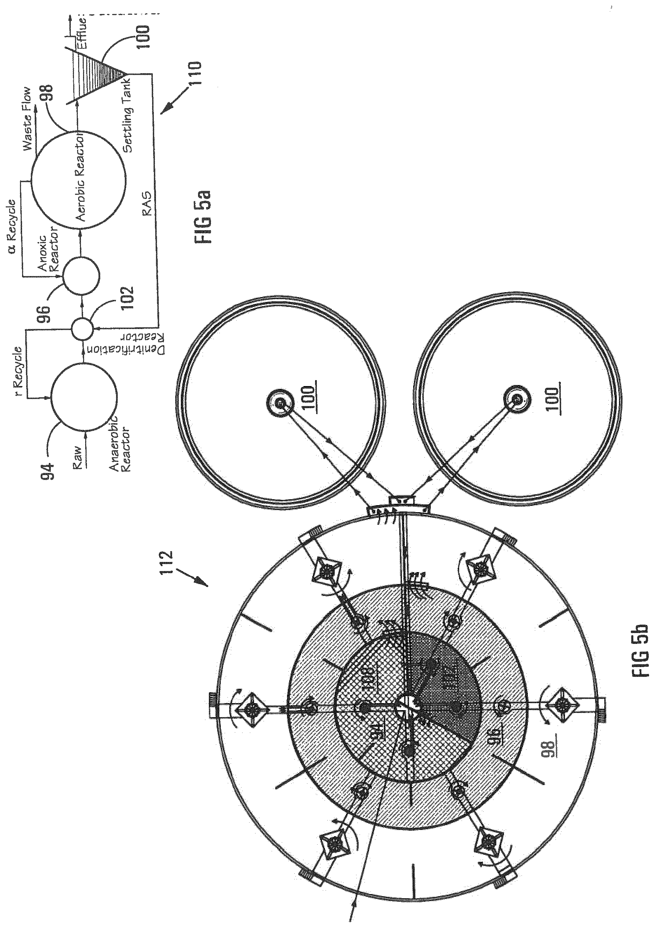

In Figure 5a, a flow diagram of a waste water treatment process is designated generally by the reference numeral 110. The waste water treatment process 110 is an activated sludge process.

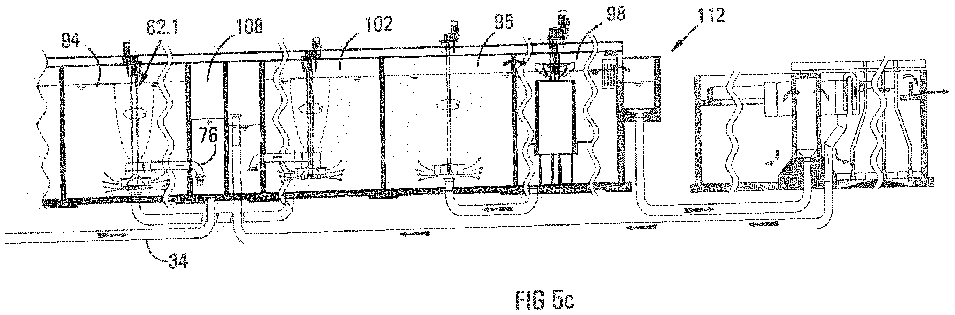

The waste water treatment process 110 is implemented by means of the waste water treatment works 112, which is shown in plan view in Figure 5b and in part sectional elevation in Figure 5c.

The waste water treatment works 112 includes the following reservoirs:
an anaerobic reactor 94;
an anoxic reactor 96;
an aerobic reactor 98;
two settling tanks 100; and
a denitrification reactor 102.

The waste water treatment works 112 includes also an arrangement of liquid transfer lines and liquid mixing and pumping systems, in accordance with the invention, for effecting mixing and pumping of liquid in the plant 112. These liquid mixing and pumping systems include a liquid mixing and pumping system 62.1.

The liquid mixing and pumping system 62.1 is similar to the liquid mixing and pumping system 62 of Figure 3. Corresponding features generally are again designated by the same reference numerals as before and are not described again.

In the waste water treatment works 112, the liquid mixing and pumping system 62.1 serves for effecting:
mixing of the liquid in the anaerobic reactor 94;
pumping of liquid from the denitrification reactor 102 to the anaerobic reactor 94 through the pipe 34 of the mixing and pumping system 62.1; and
pumping of liquid from a raw inlet chamber 108 into the anaerobic reactor 94 through the pipe 76 of the mixing and pumping system 62.1.

The mixing and pumping system 62.1 therefore eliminates the requirement of a conventional pump for effecting the pumping. Waste liquid overflows to the denitrification reactor 102 due to the liquid level in the anaerobic reactor 94 being higher than that in the denitrification reactor 102. This is due to the waste water being transferred into the anaerobic reactor 94 through the pipes 34 and 76. As part of the activated sludge process, the waste water in the denitrification reactor 102 is easily recycled back into the anaerobic reactor 94. This recycling occurs through the pipe 34.

The configuration of the waste water treatment works 92 is such that, in use, liquid is transferred by overflow from the denitrification reactor 102 to the anaerobic reactor 94 and then to the anoxic reactor 96 due to the liquid level being higher in the denitrification reactor 102 than that in the anaerobic reactor 94 and the liquid level in the anaerobic reactor 94 being higher than that in the anoxic reactor 96.

As part of the activated sludge process, a certain proportion of the liquid is required to be recycled from the aerobic reactor 98, in which aeration occurred, to the anoxic reactor 96, in which no oxygen is present. This is achieved by means of the liquid mixing and pumping system 10.1, which effects such transfer through the transfer pipe 34, which is also referred to as "a Recycle" in the activated sludge process. Such recycling would conventionally have been done using a conventional pump. The use of the liquid mixing and pumping system 10.1 for both mixing and pumping of liquid therefore eliminates the use of such a conventional pump.

### Clauses:

1 A liquid mixing and pumping system for a reservoir operatively containing liquid, the system including:
   a mixer, operatively submerged in the liquid contained in the reservoir and rotatable about a vertical rotational axis, the mixer including an arrangement of vanes arranged peripherally around the rotational axis and being spaced from all sides of the reservoir; drive means for operatively rotating the mixer when submerged in the liquid to induce at the mixer a reduced pressure zone about the rotational axis and, peripherally around the vanes, outward flow of the liquid away from the mixer; and
   at least one transfer pipe defining an outlet exposed to the reduced pressure zone and an inlet in a source of the liquid, for transferring the liquid from the source into the reservoir.
2 A system as described in Clause 1, in which the rotational speed of the mixer is adjustable, thereby to vary the flow rate and potential head generated through the at least one transfer pipe.
3 A system as described in Clause 1 or in Clause 2, in which the drive means is operable to rotate the mixer at a rotational speed which is in the range 5rpm to 250rpm.
4 A system as described in any of the preceding clauses, in which the reduced pressure zone operatively extends to below and above the mixer and the at least one transfer pipe includes a lower transfer pipe having an outlet below the mixer and in the reduced pressure zone.
5 A system as described in Clause 4, in which the outlet of the lower transfer pipe is upwardly facing.
6 A system as described in any of the preceding clauses, which includes:
   a drive axle for the mixer, extending upwardly from the mixer; and an upright sleeve disposed around the drive axle, the sleeve defining a top end operatively above the surface of the liquid in the reservoir and a bottom end operatively below the surface of the liquid and above the mixer, the at least one transfer pipe including an upper transfer pipe having an outlet in communication with a passage defined in the sleeve, the outlet being at a level operatively below the surface of the liquid in the reservoir, in a configuration in which, in operation, outward flow of liquid away from the mixer causes the reduced pressure zone which, in turn, causes the liquid level in the sleeve to drop.
7 A system as defined in Clause 6, which includes a hood at the bottom end of the sleeve, disposed over the mixer, for preventing a vortex which may operatively form in the sleeve from reaching the mixer and interfering with its operation.
8 A system as defined in any of the preceding claims, in which the mixer includes a horizontally disposed vane carrier and the arrangement of vanes of the mixer includes an upper arrangement of vanes standing proud of the vane carrier.
9 A system as defined in any of Clauses 1 to 7, in which the mixer includes a horizontally disposed vane carrier and the arrangement of vanes of the mixer includes a lower arrangement of vanes depending from the vane carrier.
10A system as defined in any of Clauses 1 to 7, in which the mixer includes a horizontally disposed vane carrier and the arrangement of vanes of the mixer includes an upper arrangement of vanes standing proud of the vane carrier and a lower arrangement of vanes depending from the vane carrier.
11 A system as defined in any of the preceding clauses, which includes also at least one other mixer, with the mixers being of different sizes and being interchangeable to vary the flow rate and potential head generated through the at least one transfer pipe.
12 A waste water treatment works including a liquid mixing and pumping system, as defined in any of Clauses 1 to 10.
13 A treatment works as described in Clause 12, which includes an aerobic reactor and in which:
   the reservoir is an anoxic reactor;
   the liquid mixing and pumping system is as described in clause 4 or in clause 5;
   and the lower transfer pipe has its inlet in the aerobic reactor and serves to recycle liquid by transferring it to the anoxic reactor.
14 A treatment works as described in Clause 13, which includes a weir between the anoxic reactor and the aerobic reactor, the liquid mixing and pumping system being operable to induce, by mixing and pumping, a liquid level rise in the anoxic reactor above the level of the weir, thus inducing overflow of the liquid over the weir from the anoxic reactor into the aerobic reactor.
15 A treatment works as described in Clause 12, which includes a raw inlet chamber and in which:
   the reservoir is a raw sewage reservoir;
   the liquid mixing and pumping system is as described in clause 6 or in clause 7; and
   the upper transfer pipe has its inlet in the raw inlet chamber and serves to transfer liquid to the raw sewage reservoir.
16 A treatment works as described in Clause 12, which includes a denitrification reactor and a raw inlet chamber and in which:
   the reservoir is an anaerobic reactor;
   the liquid mixing and pumping system is as described in Clause 6 or in Clause 7, insofar as it is refers to Clause 4;
   the lower transfer pipe has its inlet in the denitrification reactor and serves to transfer liquid to the anaerobic reactor; and
   the upper transfer pipe has its inlet in the raw inlet chamber and serves to transfer liquid to the anaerobic reactor.
17 A method of agitating and pumping liquid, the method including:
   by means of a mixer submerged in a liquid in a reservoir and rotatable about a vertical rotational axis, creating, peripherally around the mixer, outward flow of the liquid away from the mixer, the mixer including an arrangement of vanes arranged peripherally around the rotational axis;
   by such flow of liquid, agitating the liquid in the reservoir and inducing at the mixer a reduced pressure zone about the rotational axis within and above and below the arrangement of vanes;
   by such inducing of a reduced pressure zone, inducing a pressure head between an outlet of a transfer pipe, the outlet being exposed to the reduced pressure zone, and an inlet of the transfer pipe; and
   by inducing such a pressure head, inducing flow of liquid away from a source at the inlet of the pipe and into the reservoir.

## Claims

1. A waste water treatment works including a liquid mixing and pumping system (10) for a first reservoir (20) operatively containing liquid (46), the system (10) including:
a mixer (28), operatively submerged in the liquid (46) contained in the first reservoir (20) and rotatable about a vertical rotational axis (30), the mixer (28) including an arrangement of vanes (44) arranged peripherally around the rotational axis (30) and being spaced from all sides of the first reservoir (20);
a horizontally disposed vane carrier plate (42);
drive means (32) for operatively rotating the mixer (28) when submerged in the liquid (46) to induce at the mixer (28) a reduced pressure zone (50) at a centre of and immediately below the mixer (28) and, peripherally around the vanes (44), centrifugal forces create an increased pressure zone (50) peripherally around the mixer 28 causing outward flow (54) of the liquid away (46) from the mixer (28) at a flow rate Qm, the liquid (46) thus being agitated and circulated in the first reservoir (20);
a second reservoir (22) separated from the first reservoir (20) by a wall (18) with a weir (48); and
a lower transfer pipe (34) between the first reservoir (20) and the second reservoir (22);
**characterised in that:**
the lower transfer pipe (34) defines an outlet (38) exposed to the reduced pressure zone (52) and an inlet (36) in the second reservoir (22), for transferring liquid from the second reservoir (22) into the first reservoir (20);
the arrangement of vanes (44) depends downwardly from the vane carrier plate (42);
the lower transfer pipe (34) includes a horizontal collar (40) near a bottom of the first reservoir (20) and coaxial with and below the mixer (28);
a vertical gap (Y4) is defined between the collar (40) and bottom edges of the vanes (44);
a concomitant pressure head causes the liquid (46) to flow (56) through the lower transfer pipe (34) at a flow rate Qt, such liquid flow (56) into the first reservoir (20) causes the liquid (46) to flow (58) over the weir (48), thus achieving circulation of the liquid (46) between the first reservoir (20) and the second reservoir (22).

2. The treatment works as claimed in claim 1, in which the rotational speed of the mixer (28) is adjustable, thereby to vary the flow rate and potential head generated through the lower transfer pipe (34).

3. The treatment works as claimed in claim 1 or in claim 2, in which the drive means (32) is operable to rotate a rotor (24) of the mixer (28) at a rotational speed below 200 rpm.

4. The treatment works as claimed in any of claim 1-3, which includes at least a second mixer, with the mixers being of different sizes and being interchangeable to vary the flow rate and potential head generated through the upper transfer pipe (34).

5. The treatment works (92) as claimed in any one of the claims 1-4, in which the first reservoir (20) is an anoxic reactor (96).

6. The treatment works (92) as claimed in claim 5, in which the second reservoir (22) is an aerobic reactor (98), the lower transfer pipe (34) serving to transfer liquid from the aerobic reactor (94) to the anoxic reactor (96).

7. The treatment works (112) as claimed in any one of claims 1 to 4, in which:
the first reservoir (20) is an anaerobic reactor (94); and
the second reservoir (22) is a denitrification reactor (102), the lower transfer pipe (34) serving to transfer liquid from the denitrification reactor (102) to the anaerobic reactor (94).

8. The treatment works as claimed in any one of claims 1-7, in which the liquid transferred from the second reservoir (22) to the first reservoir (20) is then mixed (M) in the first reservoir (20) by the mixer (68).

9. The treatment works as claimed in any one of the claims 1-8, in which varying Y4 influences a ratio of Qm:Qt.
